# EUROPEAN PATENT APPLICATION

(11) **EP 1 033 521 A2**
(43) Date of publication of application: **06.09.2000**
(21) Application number: 00830141.8
(22) Date of filing: 28.02.2000
(51) Int. Cl.: F16L 37/02, F16L 37/04

(54) **Universal adapter for jointing tubes**

(30) Priority: 03.03.1999 IT RM990039 U
(71) Applicant: Sabras S.r.l., 25011 Ponte San Marco di Calcinato (BS) (IT)
(72) Inventor: Savardi, Lino, 25060 Villa Carcina (BS) (IT)
(74) Representative: Iannone, Carlo Luigi

(57) **Abstract**

The present invention relates to an universal adapter (1; 11; 21; 31) for jointing tubes (2; 12; 22; 33), comprising a body, provided in a substantially upper position with an outer ledge (3; 13; 23) for the tube to be jointed, and in a substantially lower position with an gasket (4; 14; 24; 32) outwardly placed with respect to said body, said tube (2; 12; 22; 33) to be jointed being placed out of said adapter (1; 11; 21; 31).

## Description

The present invention relates to a universal adapter for jointing tubes.

More specifically, the invention relates to a device of the above kind, particularly suitable to joint tube for hydro-thermo-sanitary use, comprised of metal, plastic material, or of a composite structure metal - plastic material.

As it is well known, many tube joints are presently available on the market. Mainly, said joints are realised on the basis of the features of the kind of tube with which they must be used.

Unavoidably, it involves some problems, since it is necessary to have the more specific adapter for the specific situation. On the basis of this situation, remarkable costs and not negligible problems for storing and manufacturing obviously derive.

In view of the above, the Applicant has realised a universal adapter that can be used with any kind of tube with the same inner diameter.

The adapter suggested according to the present invention, beside its universality, allows to avoid the direct contact of the tube with the water passing through, problem particularly important with multilayer tubes where corrosive phenomenon and possible contamination of water with aluminium occurs, aluminium being one of the materials used for the composite material of the tube.

Main object of the present invention is therefore that of providing an adapter that can be used with any kind of adapter between those normally employed in the thermo-hydraulic field, independently from the material of the tube, such as metallic tubes, plastic material tubes of any kind, multilayer tubes, i.e. tubes comprised of composite material made up of different polymers combined with aluminium or copper, bimetallic tubes, comprised of two different metallic materials placed one above the other, and metallic tubes coated with plastic material.

Another object of the present invention is that of providing an adapter able to provide an optimum mechanical seal.

It is therefore specific object of the present invention an universal adapter for jointing tubes, comprising a body, provided in a substantially upper position with an outer ledge for the tube to be jointed, and in a substantially lower position with an gasket outwardly placed with respect to said body, said tube to be jointed being placed out of said adapter.

Preferably, according to the invention, said adapter can be comprised of metallic material, plastic material or of metal - plastic composite material.

Furthermore, according to the invention, said adapter can be used to joint plastic material tubes, metallic tubes, multilayer tubes, or coated metallic tubes coated with plastic material.

According to the invention, said ledge can be obtained by an upper inverted "U" shaping of said body.

Still according to the invention, said ledge can be obtained by a variation of the section of the adapter body, said variation being also realisable by an inner variation of the body section or maintaining internally constant the body section.

Furthermore, according to the invention, said gasket can be limited to the lower portion of the body, or can extend up to said ledge.

Preferably, said gasket can be comprised of soft rubber, such as EPDM and like.

The present invention will be now described, for illustrative but not limitative purposes, according to its preferred embodiments, with particular reference to the figures of the enclosed drawings, wherein:
figure 1 shows a first embodiment of the adapter according to the invention;
figure 2 shows a second embodiment of the adapter according to the invention;
figure 3 shows the adapter of figure 2 with a tube inserted in the same;
figure 4 shows a third embodiment of the adapter according to the invention;
figure 5 shows the adapter of figure 4 with a tube inserted in the same;
figure 6 shows a fourth embodiment of the adapter according to the invention;
figure 7 shows the adapter of figure 7 with a tube inserted in the same;
figure 8 shows a fifth embodiment of the adapter according to the invention;
figure 9 shows the adapter of figure 8 with a tube inserted in the same;
figure 10 shows a sixth embodiment of the adapter according to the invention;
figure 11 shows the adapter of figure 10 with a tube inserted in the same; and
figures 12a and 12b show a seventh embodiment of the adapter according to the invention.

As already mentioned in the above, the adapter according to the invention can be comprised both of metallic or of plastic material. Further, it can be comprised with a different geometry in function of the material used for its realisation and of the kind of jointing and tube with which is coupled.

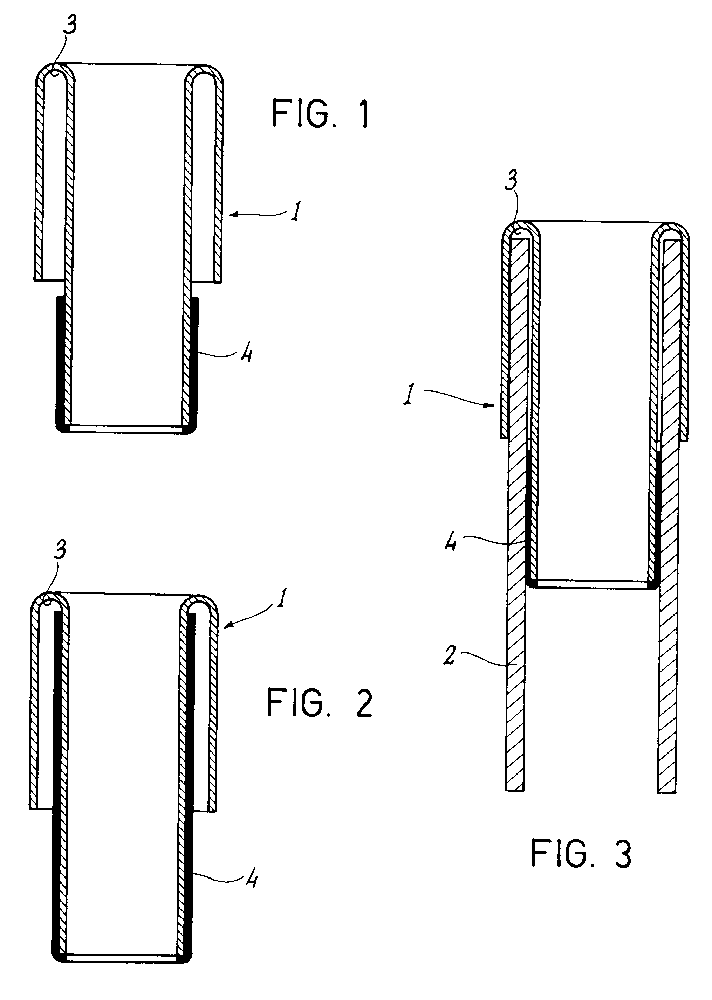

Referring now to the figures of the enclosed drawings, particularly to figures 1 - 3 and 4 - 7, embodiments of the adapter according to the invention are shown, comprised of steel or plastic material.

Particularly, referring to figures 1 - 3, it is shown an adapter 1 having an upper inverted "U"-shaped section, to house the end of the tube 2 to be jointed, realising a coupling ledge.

At the bottom, the adapter 1 according to the invention has a soft rubber (e.g. EPDM or like) gasket 4, the (collar) structure and position of which create an indefinite series of O-rings.

Said gasket 4, as shown in figure 2, could eventually be extended up to the abutment zone of the tube 1 to guarantee a better hydraulic seal.

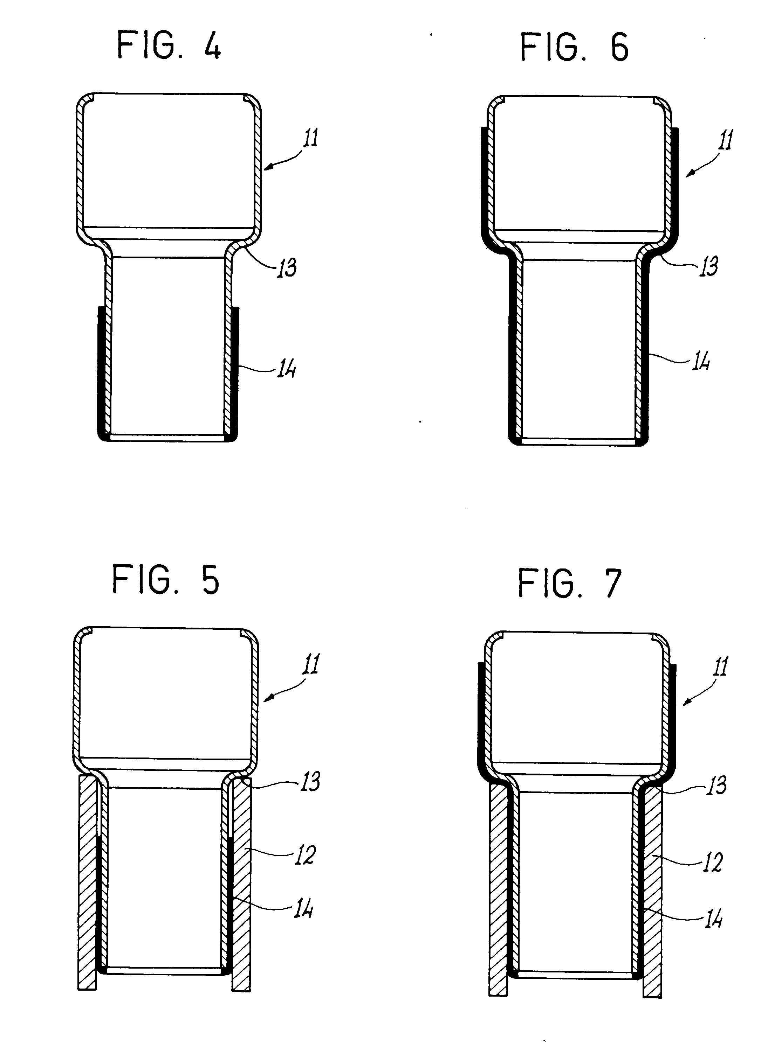

Making now reference to the figures 4 - 7, it is shown an adapter 11 according a different embodiment having a ledge 13 provided outward by an increase of the section of the body of the adapter 11.

In this case too, the adapter 11 provides at the bottom a soft rubber (e.g. EPDM or like) gasket 14, the (collar) structure and position of which create an indefinite series of O-rings.

Said gasket 14, as shown in figure 6, could eventually be extended up to the abutment zone of the tube 11 to guarantee a better hydraulic seal.

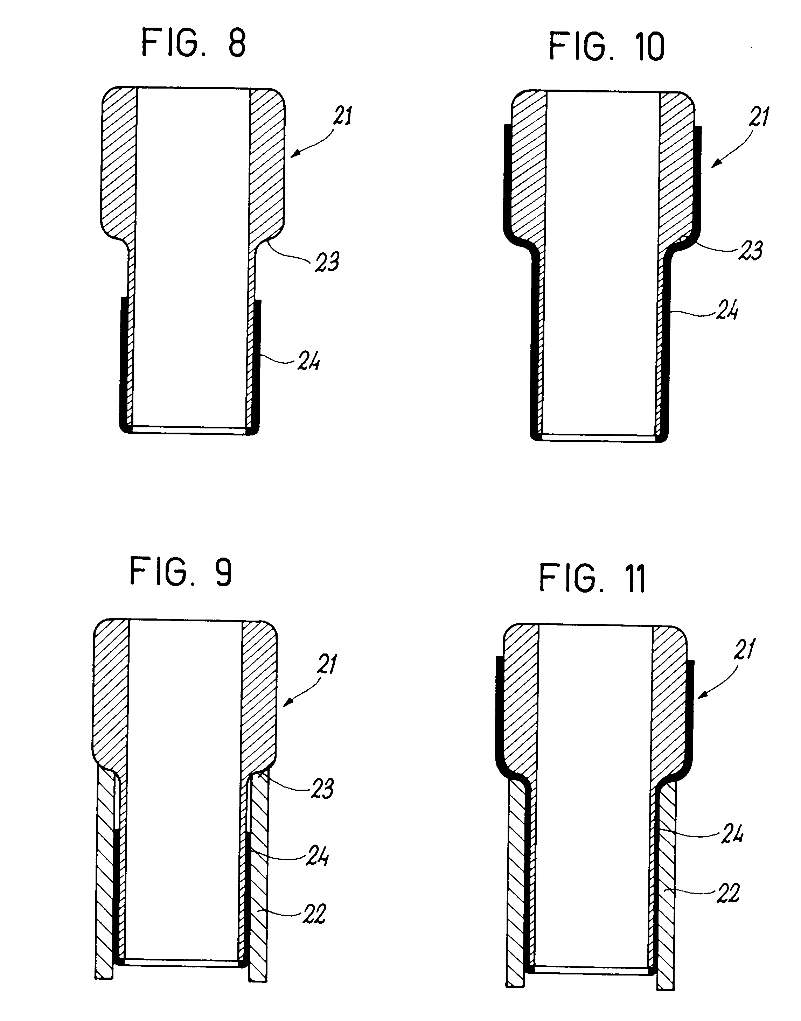

Coming now to evaluate figures 8 - 11, it is shown a third embodiment of the adapter 21 according to the invention, having a constant inner section, so that it can more easily realised by brass.

In this case too, the adapter 21 provides at the bottom a soft rubber (e.g. EPDM or like) gasket 24, the (collar) structure and position of which create an indefinite series of O-rings.

Said gasket 24, as shown in figure 10, could eventually be extended up to the abutment zone of the tube 21 to guarantee a better hydraulic seal.

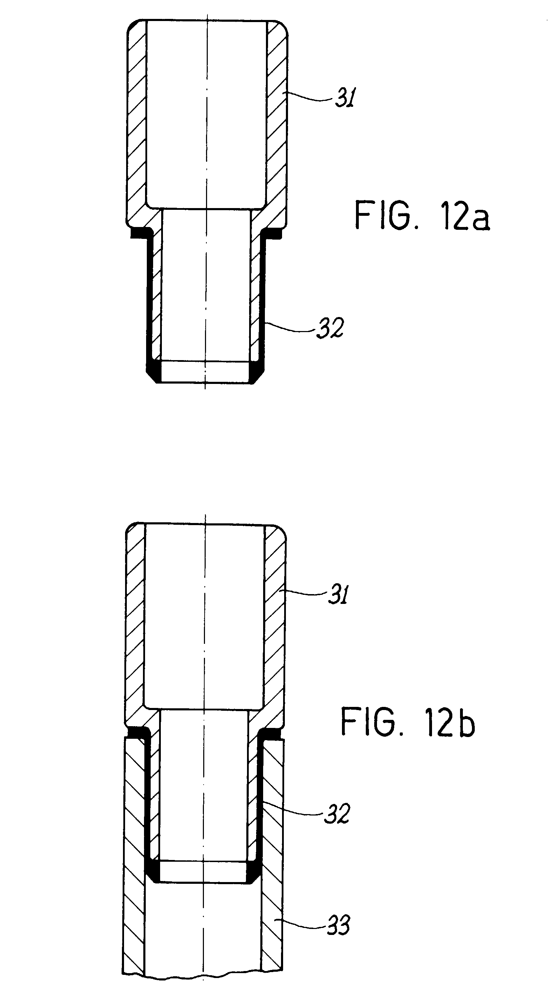

Observing now figures 12a and 12b, it is shown a further embodiment of the adapter according to the invention, wherein the adapter is indicated by reference number 31, gasket by reference number 32 and the tube (figure 12b) by the reference number 33.

This embodiment provides a gasket 32 so shaped to allow avoiding the provision of the dielectric ring, preventing the passage of the stray currents.

In the following it will be described the use of the adapter according to the invention. After having cut the tube 2, 12, 22 or 33 with the wished size, it is necessary to introduce the adapter 1, 11, 21 or 31 into the end up the ledge 3, 13 or 23. Then, the tube 2, 12, 22 or 33 along with the adapter 1, 11, 21 or 31 within the union and the jointing is carried out, said jointing varying in function of the kind of union used.

Particularly, it could be a "pinching" union wherein, once manually placed the tube with the adapter up to the ledge within the union body, the jointing will be carried out by a tube tightening pliers, the mechanical action of which, exerted in correspondence of the zone occupied by the jaw or similar device, which are characteristic for this kind of unions, realises its integration thanks to the resistance of the adapter with the outer surface of the tube (which is more malleable). During this phase, it is realised also, by compression, the inner hydraulic sealing on a limited part of the rubber gasket provided along the body of the adapter.

Another kind of union can be of the "tightening" kind, wherein the tube is placed with the adapter within the body of the union up to the ledge, and the jointing is realised by the tightening of the mechanical seal ring nut, which is characteristic for this kind of unions. In this case too, the hydraulic sealing is ensured by compression of the rubber gasket on the body of the adapter.

By the adapter according to the invention, it is guaranteed the hermetic sealing by the compression action exerted on the body of the union and consequently on the body of the adapter, by the coaction of electrical or mechanical devices (pinching unions) or of manual devices (tightening unions), the reliability of which has been positively tested since many years.

Hydraulic sealing is ensured by the rubber collar gasket that, as already mentioned in the above, guarantee a remarkably better sealing with respect to the sealing obtained by one or more traditional O-rings.

The (outer) ledge position of the tube and the mechanical seal mode of the jointing (by outer compression on the body of the adapter) allow to avoid the noticeable section reduction (and the consequent load losses) that are typical for all the unions used in the metallic, polymeric or composite material tubes field.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Universal adapter for jointing tubes, characterised in that it comprises a body, provided in a substantially upper position with an outer ledge for the tube to be jointed, and in a substantially lower position with an gasket outwardly placed with respect to said body, said tube to be jointed being placed out of said adapter.

2. Universal adapter for jointing tubes according to claim 1, characterised in that said adapter is comprised of metallic material, plastic material or of metal - plastic composite material.

3. Universal adapter for jointing tubes according to one of the preceding claims, characterised in that said adapter is used to joint plastic material tubes, metallic tubes, multilayer tubes, or coated metallic tubes coated with plastic material.

4. Universal adapter for jointing tubes according to one of the preceding claims, characterised in that said ledge is obtained by an upper inverted "U" shaping of said body.

5. Universal adapter for jointing tubes according to one of the preceding claims 1 - 3, characterised in that said ledge is obtained by a variation of the section of the adapter body, said variation being also realisable by an inner variation of the body section or maintaining internally constant the body section.

6. Universal adapter for jointing tubes according to one of the preceding claims, characterised in that said gasket is limited to the lower portion of the body.

7. Universal adapter for jointing tubes according to one of the preceding claims 1 - 5, characterised in that said gasket extends up to said ledge.

8. Universal adapter for jointing tubes according to one of the preceding claims, characterised in that said gasket is comprised of soft rubber, such as EPDM and like.

9. Universal adapter for jointing tubes according to each one of the preceding claims, substantially as illustrated and described.
